# EUROPÄISCHE PATENTSCHRIFT

(11) **EP 0 952 096 B1**
(45) Veröffentlichungstag und Bekanntmachung des Hinweises auf die Patenterteilung: **13.11.2002**
(21) Anmeldenummer: 99107356.0
(22) Anmeldetag: 21.04.1999
(51) Int. Cl.: B65G 13/06

(54) **Anordnung zum Bewegen eines Fördergutes entlang einer Förderebene**
Device for moving a load along a conveyor line
DISPOSITIF POUR DEPLACER UNE CHARGE SUR UN TRAJET DE TRANSPORT

(30) Priorität: 21.04.1998 DE 19817713; 24.04.1998 DE 19818522
(43) Veröffentlichungstag der Anmeldung: 27.10.1999
(73) Patentinhaber: JENOPTIK Aktiengesellschaft, 07743 Jena (DE); Wittenstein Motion Control GmbH, 97999 Igersheim (DE)
(72) Erfinder: Schreger, Adolf, 25421 Pinneberg (DE); Wittenstein, Manfred, 97980 Mergentheim (DE)
(74) Vertreter: Freitag, Joachim, Dipl.-Phys.

(56) Entgegenhaltungen:
- EP-A- 0 481 587
- EP-A- 0 512 672
- EP-A- 0 937 661
- GB-A- 2 291 848
- US-A- 5 547 069
- US-A- 5 803 234

## Beschreibung

Die Erfindung betrifft eine Anordnung zum Bewegen eines Fördergutes entlang einer Förderebene, insbesondere für Frachtladesysteme in Frachträumen vorzugsweise von Flugzeugen.

Eine Einrichtung mit den gattungsbildenden Merkmalen des Anspruchs 1 in der Fassung für die Benennungsstaaten AT, ES, JT ist aus US-A-5 547 069 bekannt.

Für die Staaten DE, FR, GB gilt als Stand der Technik nach Art. 54, Absatz 3 EPO EP-A1-0 937 661, in der eine Einrichtung mit den Merkmalen a bis g des Anspruchs 1 in der Fassung für die Benennungsstaaten DE, FR, GB beschrieben ist.

Zum Transportieren von Lasten in Flugzeugfrachträumen sind sogenannte Rollenantriebe bekannt, die zum Beispiel in der DE-PS 41 36 972 ausgiebig beschrieben sind. Hierbei wird eine Förderrolle, die mit einem Antrieb in Verbindung steht, in ihrer Rollbewegung gesteuert, indem Sensoren die Lage eines Transportgutes über dem die Förderrolle antreibenden Fördermodul erfassen und somit den Antrieb je nach Bedarf ein- oder ausschalten. Nachteilig ist dabei, dass Maßnahmen zur Realisierung von unterschiedlichen Andruckkräften nicht vorhanden sind. Diese sind aber notwendig, um die unterschiedlichsten Frachtgüter sicher bewegen und/oder halten zu können und einen solchen Antrieb betriebssicher und über lange Betriebszeiten wartungsfrei funktionierend zu gestalten.

Weiterhin ist aus der DE 196 08 236 C1 eine Rollenantriebseinheit zum Transport von Frachtbehältern bekannt geworden, bei der die Antriebsrolle von dem die Antriebsrolle treibenden Motor gleichzeitig mittels eines Nockens angehoben und gegen das Fördergut gedrückt wird.

Ähnlich arbeitet eine in der DE 39 11 214 C3 beschriebenen Rollenantriebseinheit, die vom Antriebsmotor, dessen Antriebsachse bezüglich der Rolle exzentrisch im Rolleninneren liegt, die Andruckkraft mittels eines im Rolleninneren ablaufenden Zwischenrades mit Bremseinrichtung abzweigt. Bei dieser Art von Förderrollen-Antrieben ist die Andruckkraft von dem Drehantrieb der Förderrolle abhängig, wodurch die Andruckkraft nicht auf einen für das jeweilige Fördergut geeigneten Wert einstellbar ist. Die Folgen sind ein erhöhter Verschleiß und eine relativ kurze Betriebszeit.

Die Erfindung beschäftigt sich mit dem Problem eine besonders einfach aufgebaute, bauraummäßig kleine, gattungsgemäße Einrichtung zu schaffen, die zudem mit geringem Energieeinsatz arbeitet und funktionell einen sicheren Förderbetrieb gewährleistet.

Gelöst wird dieses Problem alternativ durch eine Einrichtung nach jeweils sämtlichen Merkmalen des Anspruchs 1 oder 2.

Vorteilhafte Ausgestaltungen der Erfindung sind Gegenstand der Unteransprüche.

Bei der erfindungsgemäßen Einrichtung werden für das Drehen und das Andrücken der Förderrollen voneinander unabhängige Antriebe verwendet. Hierzu ist für die Koordination der beiden Antriebe ein Zusammenwirken mit der Sensoreinheit und einer Steuerelektronik vorgesehen, wobei die Antriebe bedarfsgerecht angesteuert und geregelt werden. Für das geordnete Zusammenspiel mehrerer Antriebseinheiten sind Datenaustausch und Steuerungskoordination mit einer Zentraleinheit vorzusehen.
Mit der erfindungsgemäßen Anordnung ist es möglich, Andruck- und Traktionskraft der Förderrolle in Abhängigkeit vom erkannten Bewegungszustand des Fördergutes einzustellen und den Verschleiß der Förderrolle zu vermindern. Weiterhin kann das Fördergut unter einer definierten Andruckkraft der Förderrolle erforderlichenfalls in entgegengesetzte Richtungen bewegt werden, wobei Beschleunigungen und Verzögerungen möglich sind. Insbesondere kann das Fördergut mittels der Förderrolle im Stillstand auch gegen ein Verschieben in Förderrichtung gesichert werden. Die Andruckkraft der Förderrolle an das Fördergut wird außerdem bei Unebenheiten der Angriffsfläche des Fördergutes auf einem konstanten Wert gehalten.

Die Erfindung soll nachstehend anhand eines Ausführungsbeispieles näher erläutert werden. Dabei zeigen:
- Fig. 1:: den prinzipiellen Aufbau eines Frachtladesystems,
- Fig. 2:: einen prinzipiellen Aufbau der erfindungsgemäßen Antriebseinheit 1,
- Fig. 3:: ein Rampenfunktionsdiagramm,
- Fig. 4:: die Draufsicht auf eine Antriebseinheit 1,
- Fig. 5:: eine Seitenansicht von Fig. 4,
- Fig. 6:: eine schematische Darstellung eines vorteilhaften kinematischen Aufbaus der Antriebseinheit 1 und
- Fig. 7:: eine schematische Darstellung eines weiteren vorteilhaften kinematischen Aufbaus der Antriebseinheit 1.

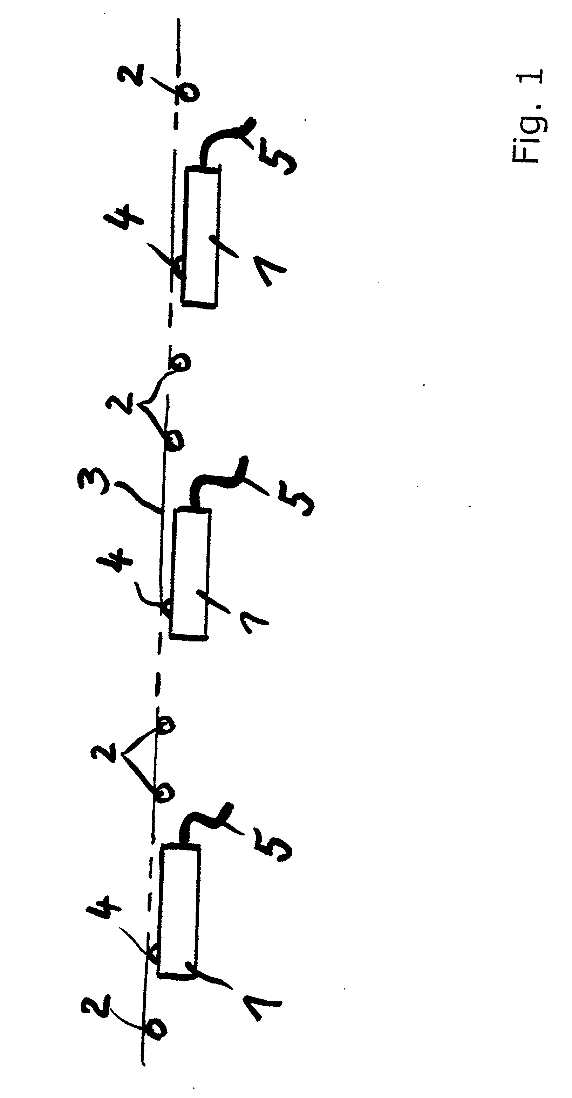

Gemäß Fig. 1 sind die wesentlichen Bestandteile eines Frachtladesystems als zweckmäßige Anwendung der Erfindung zu erkennen. Zentrale Bestandteile sind dabei die Antriebseinheiten 1, die zwischen antriebslosen Laufrollen 2 jeweils in definierten Abständen zueinander über die gesamte Transportstrecke verteilt angeordnet sind. Die genauen Abstände der Antriebseinheiten 1 sind dabei vorzugsweise in einer nicht dargestellten Zentraleinheit abgespeichert, wobei die einzelnen Antriebseinheiten 1 jeweils Verbindungen 5 zu dieser Zentraleinheit aufweisen.

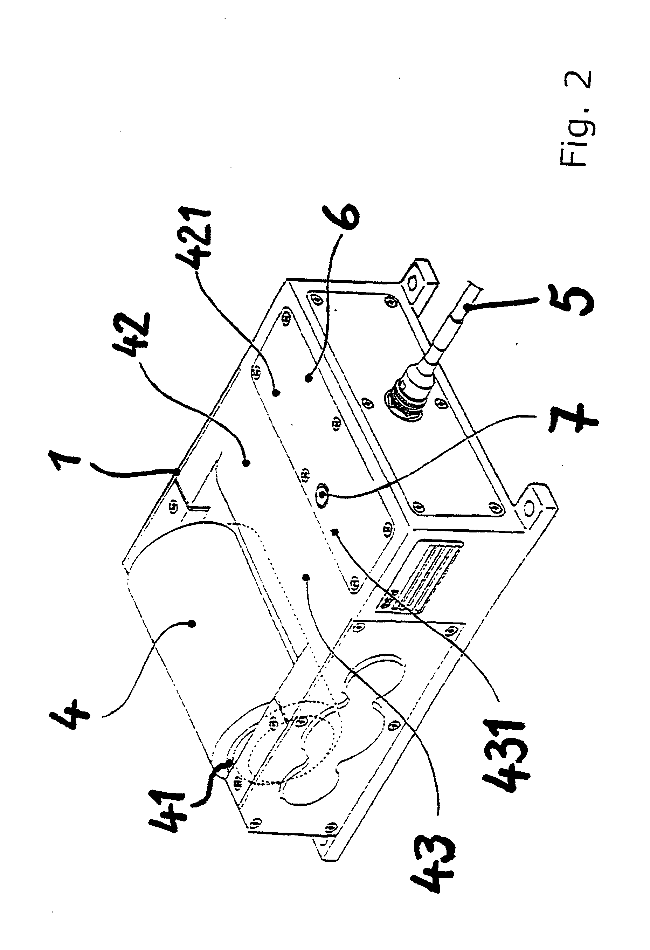

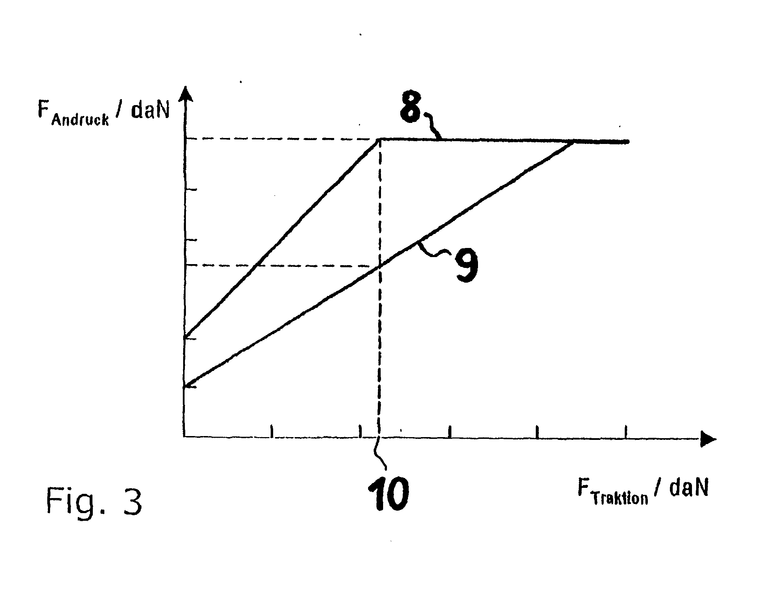

Die Laufrollen 2 haben in einem Frachtladesystem die wesentliche Trägerfunktion des Fördergutes und definieren eine sogenannte Transport- oder Förderebene 3. Gegenüber dieser Förderebene 3 sind die antreibbaren Förderrollen 4 der Antriebseinheiten 1 im Ruhezustand, d.h. im stromlosen Zustand des Förderrollenantriebs, abgesenkt, so daß sie nicht über die Förderebene 3 hinausragen und somit im Falle eines manuellen Transports des Fördergutes entlang der Förderebene 3 nicht hinderlich sind.
Wie aus Fig. 2 ersichtlich, besteht eine Antriebseinheit 1 aus einer Förderrolle 4, einem ersten Antrieb 42, einem zweiten Antrieb 43, einer ersten Ansteuereinheit 421, einer zweiten Ansteuereinheit 431, einer Selbsttesteinrichtung 6, einem Sensor 7 und den Verbindungen 5 zur Vernetzung mit der Zentraleinheit.
Die Antriebe 42 und 43 sind dabei als bürstenlose Gleichstrommotoren ausgebildet. Diese bürstenlosen Gleichstrommotoren, deren Rotoren Permanentmagnete enthalten, sind bestens steuer- und regelbar, nämlich in der Drehzahl und der zu übertragenden Kraft. Dieses geschieht mit den ihnen jeweils zugeordneten Ansteuereinheiten 421 und 431. Mit dem so ausgeführten ersten Antrieb 42, der zur Erzeugung der Traktionskraft für das Fördergut vorgesehen ist, lassen sich sowohl verschiedene Motordrehzahlen und somit unterschiedliche Transportgeschwindigkeiten als auch durch einfache Umpolung einer Sollwertvorgabe die entgegengesetzte Drehrichtung realisieren.
Der zweite Antrieb 43, der zur Erzeugung der Andruckkraft (Förderrolle 4 gegen Fördergut) vorgesehen ist, wird nach der Erkennung eines Fördergutes durch den Sensor 7 zugeschaltet und hebt somit über ein Getriebe die Förderrolle 4 bis zum Erreichen der gewünschten Andruckkraft an und verharrt in dieser Lage. Hierbei kommt die Verwendung des bürstenlosen Gleichstrommotors besonders zum Tragen, da er sich durch eine geringe Leistungsaufnahme auszeichnet, nachdem die gewünschte Andruckkraft erreicht wurde und der Gleichstrommotor in dieser Lage zur Gewährleistung einer gleichbleibenden Andruckkraft verharrt. Durch die geringe Leistungsaufnahme tritt demzufolge eine geringe Temperaturerhöhung des zweiten Antriebes 43 ein, was wiederum zu einem geringen Thermalstreß führt.
Da die beiden Antriebe 42 und 43 unabhängig voneinander ansteuerbar sind, ist es besonders vorteilhaft, wenn bei einem vom Sensor 7 über der Antriebseinheit 1 erkannten stehenden Fördergut, welches befördert werden soll, zunächst der zweite Antrieb 43 eingeschaltet wird und, nachdem die notwendige Andruckkraft erreicht wurde, der erste Antrieb 42 zugeschaltet wird, der sodann die notwendige Traktionskraft erzeugt. Falls das Fördergut als bereits bewegt erkannt wurde und weitertransportiert werden soll, wird zunächst der erste Antrieb 42 zur Erzeugung der notwendigen Traktionskraft zugeschalte und dann erst der zweite Antrieb 43 zum Erreichen der maximal gewünschter Andruckkraft. Dadurch wird der Verschleiß der Förderrolle 4 minimiert.
Weitere Vorteile der sinnvollen Kombination der unabhängig voneinander ansteuerbarer Antriebe 42 und 43 werden durch Fig. 3 gestützt.
Soll zum Beispiel ein schweres Fördergut transportiert werden, wird eine größere Traktionskraft erforderlich sein. Diese ist jedoch nur aufzubringen, wenn bei gleichbleibendem Reibwert die Förderrolle 4 mit einer größeren Andruckkraft an das Fördergut gepreßt wird, wie es in Fig. 3 die Funktionskurve 8 zeigt. Das gleiche gilt sinngemäß auch umgekehrt bei leichtem Fördergut, wobei gemäß Fig. 3 die Funktionskurve 9 zur Anwendung kommt.
Dasselbe Verhalten ist gefordert, wenn bei gleichem Gewicht des Fördergutes unterschiedliche Reibwerte auftreten. Dies ist zum Beispiel durch nasses bzw. trockenes Fördergut gegeben, wobei entsprechend ein niedrigerer bzw. ein höherer Reibwert auftritt. Dadurch wird bei niedrigem Reibwert eine höhere Andruckkraft erforderlich (Funktionskurve 8) sowie bei höherem Reibwert eine niedrigere Andruckkraft nötig sein (Funktionskurve 9). Eine Begrenzung der maximalen Andruckkraft kann nach Erreichen einer Nenntraktionskraft 10 erfolgen (siehe Funktionskurve 8). Die Vorteile dieser Steuerbarkeit sind, daß man zusätzlichen mechanischen Streß von der Antriebseinheit 1 abwendet (niedrige Andruckkraft bei leichtem und/oder trockenem Fördergut) sowie sicheren Transport des Fördergutes auch bei schlechten Bedingungen gewährleistet (hohe Andruckkraft bei schwerem und/oder nassem Fördergut). Zudem wird eine einfache und sichere Verriegelung bei leichtem Fördergut möglich, da dieses nicht durch zu hohe Andruckkräfte über die mögliche Verriegelungshöhe angehoben wird.
Für den Betrieb und für die Wartung werden wichtige Daten, wie Förderrollengeschwindigkeit, Andruckkraft, Traktionskraft und Sensorfunktion, von der Selbsttesteinrichtung 6 erfaßt, kontrolliert und erforderlichenfalls gespeichert, wobei einzelne Daten, die nicht nur für die Funktion der Antriebseinheit 1, in der sie gewonnen wurden, von Interesse sind, über die Verbindungen 5 der Zentraleinheit zugeführt. Diese Testfunktionen werden sowohl beim Einschalten der Antriebseinheit 1 als auch während des Betriebes durchgeführt.

Weiterhin läßt das vorgeschlagene Frachtladesystem mit den erfindungsgemäßen Antriebseinheiten 1 eine sogenannte Antischlupfregelung zu. Darunter ist zu verstehen, daß man bemüht sein wird, mögliche auftretende unterschiedliche Geschwindigkeiten von erstem Antrieb 42 und der Transportgeschwindigkeit des Fördergutes zu kompensieren. Es ist insbesondere bei nassem Fördergut zu verzeichnen, daß ein Schlupf auftritt, das heißt, die vom ersten Antrieb 42 vorgegebene Geschwindigkeit ist wesentlich größer als die tatsächliche Transportgeschwindigkeit des Fördergutes. Eine Kompensation erreicht man, indem die Andruckkraft erhöht wird. Die Regelung übernimmt dabei zweckmäßigerweise die Zentraleinheit, da in ihr die dazu notwendigen Informationen zusammengeführt sind, wie Abstände der Antriebseinheiten 1, eingestellte Geschwindigkeit der Förderrolle 4 und Größe der Andruckkraft, die durch den zweiten Antrieb 43 erzeugt wird.

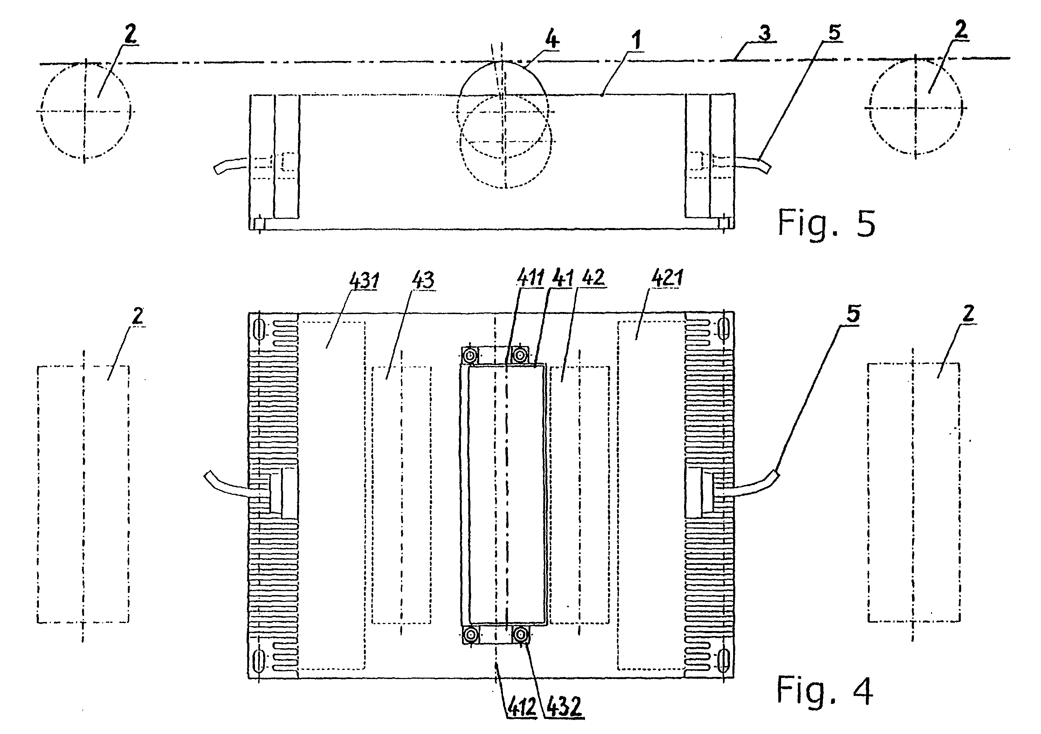

In den Figuren 4 und 5 ist nochmals eine Antriebseinheit 1 als Teil einer Fördereinrichtung mit antriebslosen Laufrollen 2 und antreibbarer Förderrolle 4 dargestellt. Im Gegensatz zu den antreibbaren Förderrollen 4 sind die antriebslosen Laufrollen 2 in strichpunktierten Linien dargestellt. Insgesamt besteht eine Fördereinrichtung der erfindungsgemäßen Gattung in der Praxis aus einer Vielzahl antriebsloser Laufrollen 2 und antreibbarer Förderrollen 4, wobei die antreibbaren Förderrollen 4 jeweils zwischen den antriebslosen Laufrollen 2 liegen. Der Abstand zwischen aufeinanderfolgenden Förderrollen 4 ist anwendungsspezifisch derart zu wählen, daß ein zu transportierendes Fördergut stets von mindestens einer antreibbaren Förderrolle 4 kontaktiert wird. Gewichtsmäßig getragen wird das Fördergut im wesentlichen von den antriebslosen Laufrollen 2. Die angetriebenen Förderrollen 4 liegen, wenn sie nicht förderaktiv sind, unterhalb der von den antriebslosen Laufrollen 2 gebildeten Förderebene 3. Voraussetzung für einen förderaktiven Zustand der angetriebenen Förderrollen 4 ist, daß sich ein Fördergut mit einer für die angetriebene Förderrolle 4 kontaktierfähigen Oberfläche über der Förderrolle 4 befindet. Der Grund, weshalb die antreibbare Förderrolle 4 im nicht aktiven Zustand unterhalb der Förderebene 3 liegen soll, besteht darin, daß anderenfalls das Fördergut an die aus der Förderebene 3 herausragende Förderrolle 4 anstoßen würde, wenn das Fördergut entlang der Förderebene 3 auf die antreibbare Förderrolle 4 zubewegt wird, oder ein Rollhindernis darstellt, falls die Förderrolle 4 im nicht aktiven Zustand auf dem Niveau der Förderebene 3 liegt. Außerdem sind bei einem förderaktiven Zustand, bei dem die Förderrollen 4 über die von den Laufrollen 2 aufgespannte Förderebene 3 hinausragen, kontrollierte Querbewegungen des Fördergutes gegenüber der Ausrichtung der Laufrollen 2 möglich, wobei in diesem Fall die Förderrollen 4 in räumlich begrenzten Bereichen zu tragenden Elementen werden. In einem solchen Bereich des Fördersystems sind die Förderrollen 4 anders ausgerichtet und weisen zueinander kleinere Abstände als die Fördergutabmessungen auf wobei wenigstens drei nicht entlang einer Geraden liegende Förderrollen 4 gleichzeitig unter dem Fördergut angreifen müssen.
Der Aufbau der Antriebseinheiten 1 wird nachstehend anhand eines Schemas gemäß Fig. 4 erläutert. Die antreibbare Förderrolle 4 ist drehbar auf einem zylindrischen Grundkörper 41 gelagert. Dieser Grundkörper 41 ist um eine zu seiner Symmetrieachse 411 exzentrische Exzenterachse 412 drehbar gelagert, wobei der Grundkörper 41 bezüglich der gehäusefesten Exzenterachse 412 in einem Exzentergegenlager 432 vertikal (aus der Zeichnungsebene heraus) schwenkbar gelagert ist. Die Förderrolle 4 ist auf ihrer Umfangsfläche als ein Elastomer ausgebildet oder mit einem Elastomermaterial überzogen.
Die Rotationsbewegung der antreibbaren Förderrolle 4 wird von einem ersten Antrieb 42 bewirkt, der mit einer eigenen Ansteuereinheit 421 (Steuerungs- und Leistungselektronik) verbunden ist. Die Antriebskraft wird von dem ersten Antrieb 42 über ein (in Fig. 4 nicht dargestelltes) Zahnradgetriebe der Förderrolle 4 zugeleitet. Mit dem Antrieb 42 kann in Verbindung mit dessen Ansteuereinheit 421 die Förderrolle 4 in entgegengesetzten Richtungen angetrieben werden. Der Anlauf der Förderrolle 4 kann beschleunigungsmäßig geregelt werden, wodurch insbesondere ein sanfter Anlauf möglich ist.
Bei einer in etwa bekannten Fördergeschwindigkeit des Fördergutes, die über die Verbindungen 5 aller Antriebseinheiten 1 von der oben erwähnten Zentralenheit berechnet wird, ist es möglich, die antreibbare Förderrolle 4 jeweils mit einer zu dieser Geschwindigkeit gleichen Geschwindigkeit an dem Fördergut angreifen zu lassen. Dabei wird die erforderliche Geschwindigkeit von der systemübergreifenden Zentraleinheit, die mittels der über die Verbindungen 5 von den einzelnen Antriebseinheiten 1 bereitgestellten Daten (Geschwindigkeit, Andruckkraft und Traktionskraft der Förderrolle 4 sowie Meßwerte des Sensors 7) versorgt, die angepaßten Ansteuerdaten berechnet.
Das Fördergut kann durch eine Reduzierung der Drehgeschwindigkeit der das Fördergut kontaktierenden Förderrolle 4 insbesondere auch definiert gebremst werden. Auch im Stillstand des Fördergutes kann die Andruckkraft, die von dem zweiten Antrieb 43 aufgebracht wird, erhalten bleiben, wodurch das Fördergut gegen Verschieben gesichert ist.

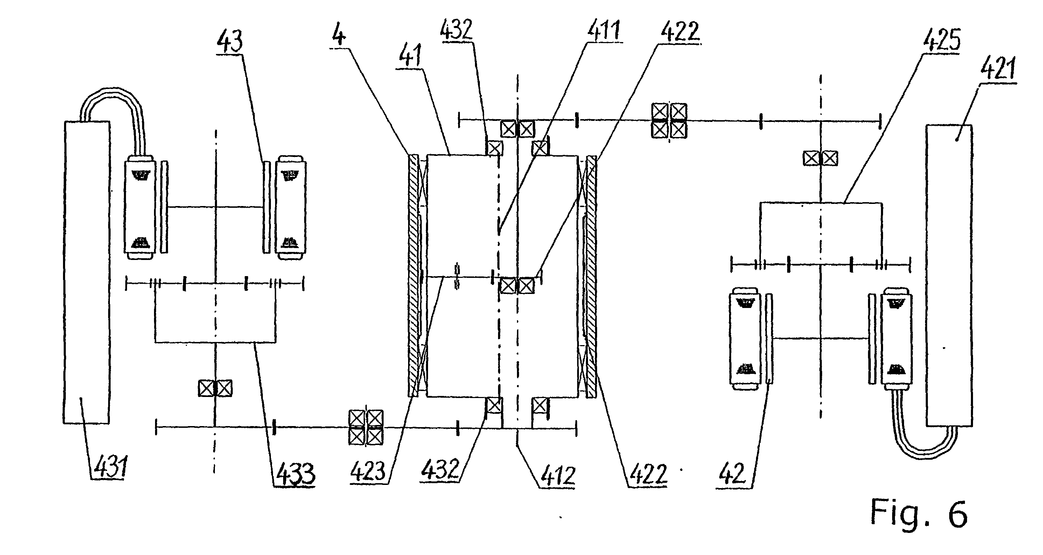

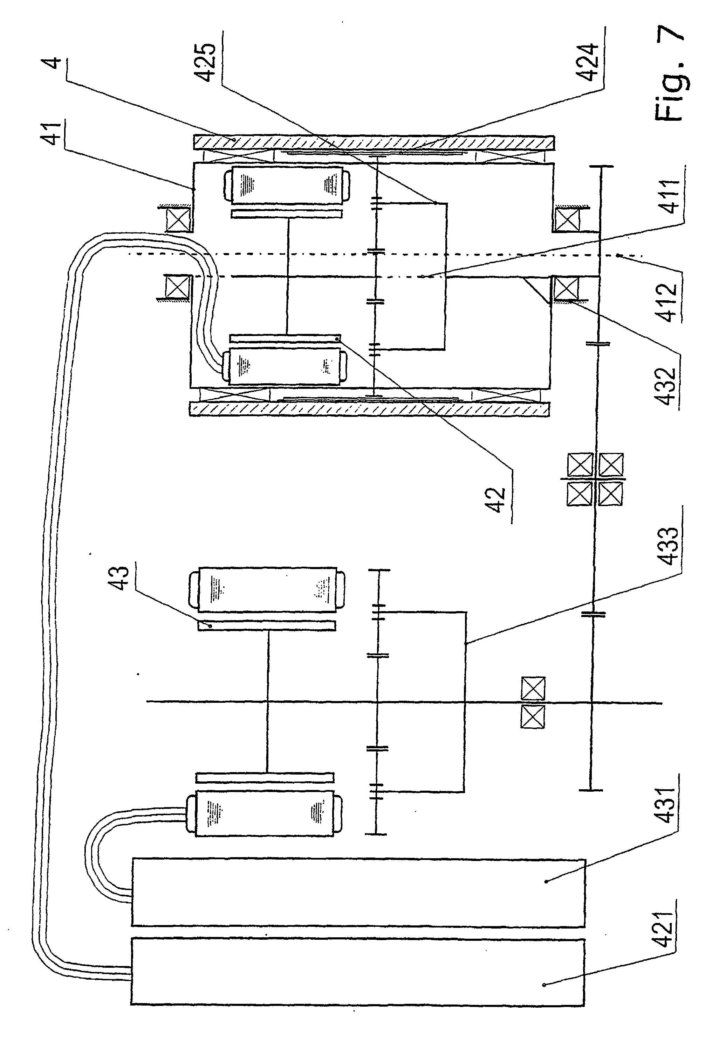

Der Aufbau der Antriebseinheiten 1 wird nachstehend anhand von Kinematikschemata erläutert. Fig. 6 zeigt die antreibbare Förderrolle 4 in einer schraffierten Schnittdarstellung. Die Förderrolle 4 ist auf der Mantelfläche eines zylindrischen Grundkörpers 41 um dessen Symmetrieachse 411 drehbar gelagert. Dieser Grundkörper 41 ist seinerseits um eine zu seiner Symmetrieachse 411 exzentrische Exzenterachse 412 drehbar gelagert, wobei der Grundkörper 41 bezüglich der gehäusefesten Exzenterachse 412 in einem Exzentergegenlager 432 vertikal schwenkbar gelagert ist.
Die Rotationsbewegung der antreibbaren Förderrolle 4 wird von einem ersten Antrieb 42 bewirkt, der mit einer eigenen Ansteuereinheit 421 verbunden ist und sich außerhalb des Grundkörpers 41 befindet. Die Antriebskraft wird von dem ersten Antrieb 42 über ein Zahnradgetriebe der Förderrolle 4 zugeleitet, wobei der erste Teil des Zahnradgetriebes als ein Planetengetriebe 425 ausgebildet ist.
Das zwischen dem Planetengetriebe 425 und der Förderrolle 4 liegende Getriebe besitzt eine in der Exzenterachse 412 an dem Grundkörper 41 gelagerte Welle mit einem Ritzel 422. Das Ritzel 422 wirkt über eine Stirnradverzahnung auf ein Abtriebszahnrad 423 ein, das wiederum - den Grundkörper 41 radial nach außen durchgreifend - die Förderrolle 4 antreibt. Das Abtriebsrad 423 kämmt dabei in einem als Hohlrad 424 ausgebildeten Bereich der Förderrolle 4.
Die Drehung des Grundkörpers 41 um dessen Exzenterachse 412 bewirkt der zweite Antrieb 43, der wiederum mit einer eigenen Ansteuereinheit 431 (Steuerungs- und Leistungselektronik) verbunden ist. Die Übertragung der Antriebsenergie des Antriebs 43 erfolgt ebenfalls über ein Zahnradgetriebe unter anderem mit einem dem Antrieb 43 direkt nachgeordneten Planetengetriebe 433.
Eine weitere vorteilhafte kinematische Ausfürungsform der erfindungsmäßen Antriebseinheit 1 ist in Fig. 7 dargestellt. Diese unterscheidet sich von dem Schema in Fig. 6 lediglich in der räumlichen Anordnung des ersten ersten Antriebs 42. Dieser ist hier wie häufig im Stand der Technik bevorzugt innerhalb der Förderrolle 4 untergebracht. Die Besonderheit besteht in diesem Beispiel darin, daß die Antriebswelle im Innern des Grundkörpers 41 von der Exzenterachse 412 in die Symmetrieachse 411 verlegt wurde und das Ritzel 422 (von Fig. 6) hier als Sonnenrad des zugleich mit dem Antrieb 42 im Innern der Förderrolle 4 angeordneten Planetengetriebes 425 ausgeführt ist. Die Planetenräder der Planetengetriebes 425 greifen - wie in Fig. 6 das Abtriebszahnrad 423 - ebenfalls durch entsprechende Ausnehmungen in der Mantelfläche des Grundkörpers 41 hindurch in den als Hohlrad 424 ausgebildeten Bereich der Förderrolle 4 ein. Alle übrigen Elemente, die den zweiten Antrieb 43 sowie die Lagerung des Grundkörpers 41 im Exzentergegenlager 432 betreffen sind gegenüber Fig. 6 unverändert. Lediglich die Ansteuereinheit 421 ist nicht mehr direkt dem Antrieb 42 beigeordnet, sondern unmittelbar neben der Ansteuereinheit 431 des zweiten Antriebs 43 positioniert.
Dadurch ergeben sich bezüglich der erfindungsgemäßen Grundidee der Erfindung keinerlei funktionelle Veränderungen, sondern weitere Vorteile durch örtliche Konzentration der Steuerelektronik auch im Zusammenwirken mit den weiteren (in Fig. 6 und 7 nicht dargestellten) elektronischen Komponenten, der Selbsttesteinrichtung 6 und der über die Verbindungen 5 vernetzten Zentraleinheit.

Durch eine Anpassung der Drehgeschwindigkeit und der Andruckkraft der Förderrolle 4 an die Fördergeschwindigkeit sowie die Förderbedingungen (wie Gewicht und Reibwert) des Fördergutes werden sowohl ruckartige Kraftübertragungen als auch Schlupf zwischen der Förderrolle 4 und dem Fördergut vermieden, wodurch der Verschleiß des das Fördergut kontaktierenden elastomeren Oberflächenmaterials der Förderrolle 4 erheblich vermindert wird. Durch eine solche Verminderung des Verschleißes ist erst nach äußerst langen Betriebszeiten ein Auswechseln des verschlissenen Förderrollenobermaterials oder der Antriebseinheit notwendig.

### Bezugszeichenliste

- 1: Antriebseinheit
- 2: (antriebslose) Laufrolle
- 3: Förderebene
- 4: (antreibbare) Förderrolle

- 41: Grundkörper
- 411: Symmertrieachse
- 412: Exzenterachse

- 42: erster Antrieb
- 421: Ansteuereinheit
- 422: Ritzel
- 423: Abtriebszahnrad
- 424: Hohlrad
- 425: Planetengetriebe

- 43: zweiter Antrieb
- 431: Ansteuereinheit
- 432: Exzentergegenlager
- 433: Planetengetriebe

- 5: Verbindung zur Zentraleinheit
- 6: Selbsttesteinrichtung
- 7: Sensoreinheit
- 8,9: Funktionskurve
- 10: Nenntraktionskraft

## Patentansprüche (Patentansprüche für folgende(n) Vertragsstaat(en): DE, FR, GB)

1. Anordnung zum Bewegen eines Fördergutes entlang einer Förderebene, die durch antriebslose, zum Tragen und Führen eines Fördergutes dienende Laufrollen (2) gebildet wird, mit einer antreibbaren Förderrolle (4), die zwischen den antriebslosen Laufrollen (2) angeordnet ist, und einer Steuerelektronik zur Steuerung eines die Förderrolle (4) treibenden Antriebs (42 und 43) mit folgenden weiteren Merkmalen
a) die Förderrolle (4) steht mit einem ersten Antrieb (42) und zugeordneter erster Ansteuereinheit (421) zur Erzeugung einer notwendigen Traktionskraft zum Bewegen des Fördergutes entlang der Förderebene (3) in Verbindung,
b) ein zweiter Antrieb (43) mit zugeordneter zweiter Ansteuereinheit (431) ist zur Erzeugung einer ausreichenden Andruckkraft der Förderrolle (4) gegen das Fördergut vorhanden,
c) die beiden unabhängig voneinander ansteuerbaren Antriebe (42, 43) sind von der Steuerelektronik koordiniert angesteuert,
d) die Förderrolle (4) ist in der Form eines Hohlzylinders auf einem zylindrischen Grundkörper (41) um dessen Symmetrieachse (411) drehbar gelagert, wobei sich das Getriebe für den ersten Antrieb (42) innerhalb des Grundkörpers (41) befindet,
e) zur Kraftübertragung vom zweiten Antrieb (43) auf den Grundkörper (41) ist ein Zahnradgetriebe eingesetzt,
f) der Grundkörper (41) ist um eine parallel zu seiner Symmetrieachse (411) verlaufende Exzenterachse (412) drehbar gelagert,
g) der zweite Antrieb (43) ist mit dem Grundkörper (41) zum Ausschwenken des Grundkörpers (41) um dessen Exzenterachse (412) und Andrücken der Förderrolle (4) an das Fördergut auf der Förderebene (3) gekoppelt,
h) zur Kraftübertragung vom ersten Antrieb (42) auf die Förderrolle (4) ist ein Zahnradgetriebe eingesetzt,
i) das die Förderrolle (4) antreibende Getriebe weist ein in der Exzenterachse (412) des zylindrischen Grundkörpers (41) gelagertes Ritzel (422) auf, das mit dem ersten Antrieb (42) in Verbindung steht und innerhalb des zylindrischen Grundkörpers (41) liegt,
k) ein radial zwischen diesem Ritzel (422) und der Förderrolle (4) achsparallel drehbar gelagertes Abtriebsrad (423) ist vorhanden, das den Grundkörper (41) radial nach außen überragend in einen als Hohlrad (424) ausgebildeten Bereich der Förderrolle (4) kämmend eingreift.

2. Anordnung zum Bewegen eines Fördergutes entlang einer Förderebene, die durch antriebslose, zum Tragen und Führen eines Fördergutes dienende Laufrollen (2) gebildet wird, mit einer antreibbaren Förderrolle (4), die zwischen den antriebslosen Laufrollen (2) angeordnet ist, und einer Steuerelektronik zur Steuerung eines die Förderrolle (4) treibenden Antriebs (42 und 43) mit folgenden weiteren Merkmalen
a) die Förderrolle (4) steht mit einem ersten Antrieb (42) und zugeordneter erster Ansteuereinheit (421) zur Erzeugung einer notwendigen Traktionskraft zum Bewegen des Fördergutes entlang der Förderebene (3) in Verbindung,
b) ein zweiter Antrieb (43) mit zugeordneter zweiter Ansteuereinheit (431) ist zur Erzeugung einer ausreichenden Andruckkraft der Förderrolle (4) gegen das Fördergut vorhanden,
c) die beiden unabhängig voneinander ansteuerbaren Antriebe (42, 43) sind von der Steuerelektronik koordiniert angesteuert,
d) die Förderrolle (4) ist in der Form eines Hohlzylinders auf einem zylindrischen Grundkörper (41) um dessen Symmetrieachse (411) drehbar gelagert, wobei sich das Getriebe für den ersten Antrieb (42) innerhalb des Grundkörpers (41) befindet,
e) zur Kraftübertragung vom zweiten Antrieb (43) auf den Grundkörper (41) ist ein Zahnradgetriebe eingesetzt,
f) der Grundkörper (41) ist um eine parallel zu seiner Symmetrieachse (411) verlaufende Exzenterachse (412) drehbar gelagert,
g) der zweite Antrieb (43) ist mit dem Grundkörper (41) zum Ausschwenken des Grundkörpers (41) um dessen Exzenterachse (412) und Andrücken der Förderrolle (4) an das Fördergut auf der Förderebene (3) gekoppelt,
h) zur Kraftübertragung vom ersten Antrieb (42) auf die Förderrolle (4) ist ein Zahnradgetriebe eingesetzt,
i) das die Förderrolle (4) antreibende Getriebe ist zwischen dem ersten Antrieb (42) und der Förderrolle (4) zumindest in einem Teilbereich als Planetengetriebe (425) ausgebildet, und
k) das die Förderrolle (4) antreibende Getriebe mit dem Planetengetriebe (425) sowie der erste Antrieb (42) sind innerhalb des Grundkörpers (41) angeordnet, wobei das Sonnenrad des Planetengetriebes (425) auf der Symmetrieachse (411) des Grundkörpers (41) angeordnet ist und die Planetenräder in einem als Hohlrad (424) ausgebildeten Bereich der Förderrolle (4) kämmen.

3. Anordnung nach Anspruch 1 oder 2,
**dadurch gekennzeichnet,**
**dass** zum Ausschwenken des Grundkörpers (41) in die Förderebene (3) zwischen dem zweiten Antrieb (43) und dem Grundkörper (41) ein zumindest in einem Teilbereich als Planetengetriebe ausgebildetes Zahnradgetriebe vorgesehen ist.

4. Anordnung nach einem der vorhergehenden Ansprüche,
**dadurch gekennzeichnet,**
**dass** mindestens der zweite Antrieb (43) zur Einstellung vorbestimmbarer Andruckkräfte der Förderrolle (4) gegen das Fördergut bezüglich seines Antriebsmomentes regelbar ist.

5. Anordnung nach Anspruch 4,
**dadurch gekennzeichnet,**
**dass** der erste und der zweite Antrieb (42, 43) als regelbare Servomotoren ausgebildet sind.

6. Anordnung nach Anspruch 5,
**dadurch gekennzeichnet,**
**dass** die Antriebe (42, 43) bürstenlose Gleichstrommotoren sind.

7. Anordnung nach einem der vorhergehenden Ansprüche,
**dadurch gekennzeichnet,**
**dass** die Steuerelektronik eine Sensoreinheit (7) zum Erkennen des Fördergutes und eine Selbsttesteinrichtung (6) enthält, die die beiden unabhängigen Antriebe (42, 43) in Abhängigkeit von einem mindestens mittels der internen Sensoreinheit (7) erkannten Bewegungszustand des Fördergutes steuert.

8. Anordnung nach Anspruch 7,
**dadurch gekennzeichnet,**
**dass** die Selbsttesteinrichtung (6) mit der Sensoreinheit (7) in Verbindung steht, wobei in Abhängigkeit vom erkannten stehenden oder bewegten Zustand des Fördergutes alternativ zunächst der zweite Antrieb (43) vor dem Zuschalten des ersten (42) oder zuerst der erste Antrieb (42) vor dem Zuschalten des zweiten (43) über die Ansteuereinheiten (421, 431) ansteuerbar ist.

9. Anordnung nach Anspruch 6 oder 7,
**dadurch gekennzeichnet,**
**dass** die Selbsttesteinrichtung (6) über Verbindungen (5) zur Übermittlung von gewonnenen Daten, wie Andruckkraft, Traktionskraft, Sensorfunktion und Drehgeschwindigkeit der Förderrolle (4) mit einer Zentraleinheit in Verbindung steht.

10. Anordnung nach Anspruch 9,
**dadurch gekennzeichnet,**
**dass** in der Selbsttesteinrichtung (6) Mittel zur Antischlupfregelung vorgesehen sind, wobei über die Zentraleinheit mittels der gewonnen Daten aus verschiedenen Antriebseinheiten (1), der Kenntnis der genauen Abstände der Antriebseinheiten (1) sowie der Kenntnis der Drehgeschwindigkeit der Förderrolle (4) und der realen Transportgeschwindigkeit des Fördergutes ein entstehender Schlupf durch gezielte Erhöhung der Andruckkraft kompensierbar ist.

## Patentansprüche (Patentansprüche für folgende(n) Vertragsstaat(en): AT, ES, IT)

1. Anordnung zum Bewegen eines Fördergutes entlang einer Förderebene, die durch antriebslose, zum Tragen und Führen eines Fördergutes dienende Laufrollen (2) gebildet wird, mit einer abtreibbaren Förderrolle (4), die zwischen den antriebslosen Laufrollen (2) angeordnet ist, und einer Steuerelektronik zur Steuerung eines die Förderrolle (4) treibenden Antriebs (42 und 43) mit folgenden weiteren Merkmalen
a) die Förderrolle (4) steht mit einem ersten Antrieb (42) und zugeordneter erster Ansteuereinheit (421) zur Erzeugung einer notwendigen Traktionskraft zum Bewegen des Fördergutes entlang der Förderebene (3) in Verbindung,
b) ein zweiter Antrieb (43) mit zugeordneter zweiter Ansteuereinheit (431) ist zur Erzeugung einer ausreichenden Andruckkraft der Förderrolle (4) gegen das Fördergut vorhanden,
c) die beiden unabhängig voneinander ansteuerbaren Antriebe (42, 43) sind von der Steuerelektronik koordiniert angesteuert,
d) die Förderrolle (4) ist in der Form eines Hohlzylinders auf einem zylindrischen Grundkörper (41) um dessen Symmetrieachse (411) drehbar gelagert,
e) zur Kraftübertragung vom ersten Antrieb (42) auf die Förderrolle (4) ist ein Zahnradgetriebe eingesetzt, wobei sich das Getriebe für den ersten Antrieb (42) innerhalb des Grundkörpers (41) befindet,
**gekennzeichnet durch die Merkmale,**
f) der Grundkörper (41) ist um eine parallel zu seiner Symmetrieachse (411) verlaufende Exzenterachse (412) drehbar gelagert,
g) der zweite Antrieb (43) ist mit dem Grundkörper (41) zum Ausschwenken des Grundkörpers (41) um dessen Exzenterachse (412) und Andrücken der Förderrolle (4) an das Fördergut auf der Förderebene (3) gekoppelt.
h) zur Kraftübertragung vom zweiten Antrieb (43) auf den Grundkörper (41) ist ein Zahnradgetriebe eingesetzt.

2. Anordnung nach Anspruch 1,
**dadurch gekennzeichnet,**
**dass** die Steuerelektronik eine Sensoreinheit (7) zum Erkennen des Fördergutes und eine Selbsttesteinrichtung (6) enthält, die die beiden unabhängigen Antriebe (42, 43) in Abhängigkeit von einem mindestens mittels der internen Sensoreinheit (7) erkannten Bewegungszustand des Fördergutes steuert.

3. Anordnung nach Anspruch 1 oder 2,
**dadurch gekennzeichnet, dass**
- das die Förderrolle (4) antreibende Getriebe ein in der Exzenterachse (412) des zylindrischen Grundkörpers (41) gelagertes Ritzel (422) aufweist, das mit dem ersten Antrieb (42) in Verbindung steht und innerhalb des zylindrischen Grundkörpers (41) liegt, und
- ein radial zwischen diesem Ritzel (422) und der Förderrolle (4) achsparallel drehbar gelagertes Abtriebsrad (423) vorhanden ist, das den Grundkörper (41) radial nach außen überragend in einen als Hohlrad (424) ausgebildeten Bereich der Förderrolle (4) kämmend eingreift.

4. Anordnung nach Anspruch 1 oder 2,
**dadurch gekennzeichnet,**
**dass** das die Förderrolle (4) antreibende Getriebe zwischen dem ersten Antrieb (42) und der Förderrolle (4) zumindest in einem Teilbereich als Planetengetriebe (425) ausgebildet ist.

5. Anordnung nach Anspruch 4,
**dadurch gekennzeichnet,**
**dass** das die Förderrolle (4) antreibende Getriebe mit dem Planetengetriebe (425) sowie der erste Antrieb (42) innerhalb des Grundkörpers (41) angeordnet sind, wobei das Sonnenrad des Planetengetriebes (425) auf der Symmetrieachse (411) des Grundkörpers (41) angeordnet ist und die Planetenräder in einem als Hohlrad (424) ausgebildeten Bereich der Förderrolle (4) kämmen.

6. Anordnung nach Anspruch 1 oder 2,
**dadurch gekennzeichnet,**
**dass** das Getriebe zum Ausschwenken des Grundkörpers (41) in die Förderebene (3) zwischen dem zweiten Antrieb (43) und dem Grundkörper (41) zumindest in einem Teilbereich als Planetengetriebe (433) ausgebildet ist.

7. Anordnung nach einem der vorhergehenden Ansprüche,
**dadurch gekennzeichnet,**
**dass** mindestens der zweite Antrieb (43) zur Einstellung vorbestimmbarer Andruckkräfte der Förderrolle (4) gegen das Fördergut bezüglich seines Antriebsmoments regelbar ist.

8. Anordnung nach Anspruch 7,
**dadurch gekennzeichnet,**
**dass** der erste und zweite Antrieb (42, 43) als regelbare Servomotoren ausgebildet sind.

9. Anordnung nach Anspruch 8,
**dadurch gekennzeichnet,**
**dass** die Antriebe (42, 43) bürstenlose Gleichstrommotoren sind.

10. Anordnung nach Anspruch 2,
**dadurch gekennzeichnet,**
**dass** die Selbsttesteinrichtung (6) mit der Sensoreinheit (7) in Verbindung steht, wobei in Abhängigkeit vom erkannten stehenden oder bewegten Zustand des Fördergutes alternativ zunächst der zweite Antrieb (43) vor dem Zuschalten des ersten (42) oder zuerst der erste Antrieb (42) vor dem Zuschalten des zweiten (43) über die Ansteuereinheiten (421, 431) ansteuerbar ist.

11. Anordnung nach Anspruch 10,
**dadurch gekennzeichnet,**
**dass** die Selbsttesteinrichtung (6) über Verbindungen (5) zur Übermittlung von gewonnenen Daten, wie Andruckkraft, Traktionskraft, Sensorfunktion und Drehgeschwindigkeit der Förderrolle (4) mit einer Zentraleinheit in Verbindung steht.

12. Anordnung nach Anspruch 11,
**dadurch gekennzeichnet,**
**dass** in der Selbsttesteinrichtung (6) Mittel zur Antischlupfregelung vorgesehen sind, wobei über die Zentraleinheit mittels der gewonnen Daten aus verschiedenen Antriebseinheiten (1), der Kenntnis der genauen Abstände der Antriebseinheiten (1) sowie der Kenntnis der Drehgeschwindigkeit der Förderrolle (4) und der realen Transportgeschwindigkeit des Fördergutes ein entstehender Schlupf durch gezielte Erhöhung der Andruckkraft kompensierbar ist.

## Claims (Claims for the following Contracting State(s): DE, FR, GB)

1. Installation for moving a conveyed material along a conveyor plane, which is defined by undriven rollers (2) serving to carry and guide a conveyed material, including a drivable conveying roller (4), which is arranged between the undriven rollers (2), and an electronic control system for controlling a motor (42 and 43) driving the conveying rollers (4) including the following further features
a) the conveying roller (4) is connected to a first motor (42) and associated first control unit (421) for producing a necessary traction force to move the conveyed material along the conveyor plane (3),
b) a second motor (43) with an associated second control unit (431) is present to produce a sufficient pressure of the conveying roller (4) against the conveyed material,
c) the two motors (42, 43), which are controllable independently of one another, are controlled by the electronic control system in a coordinated manner,
d) the conveying roller (4) is in the form of a hollow cylinder and rotatably mounted on a cylindrical base body (41) to be rotatable about its axis of symmetry (411), whereby the gear unit for the first motor (42) is situated within the base body (41),
e) a toothed gear unit is used to transmit force from the second motor (43) to the base body (41),
f) the base body (41) is mounted rotatably about an eccentric axis (412) extending parallel to its axis of symmetry (411),
g) the second motor (43) is coupled to the base body (41) for swinging the base body (41) out about its eccentric axis (412) and pressing the conveying roller (4) onto the conveyed material on the conveyor plane (3),
h) a toothed gear unit is used to transmit force from the first motor (42) to the conveying roller (4),
i) the gear unit driving the conveying roller (4) has a pinion (422), which is mounted in the eccentric axis (412) of the cylindrical base body (41) and is connected to the first motor (42) and is situated within the cylindrical base body (41),
k) a driven wheel (423), which is rotatably mounted parallel to the axis, is present radially between this pinion (422) and the conveying roller (4) which projects radially outwardly beyond the base body (41) and meshingly engages in the region of the conveying roller (4) constructed in the form of a hollow wheel (424).

2. Installation for moving a conveyed material along a conveyor plane, which is defined by undriven rollers (2) serving to carry and guide a conveyed material, including a drivable conveying roller (4), which is arranged between the undriven rollers (2), and an electronic control system for controlling a motor (42 and 43) driving the conveying rollers (4) including the following further features
a) the conveying roller (4) is connected to a first motor (42) and associated first control unit (421) for producing a necessary traction force to move the conveyed material along the conveyor plane (3),
b) a second motor (43) with an associated second control unit (431) is present to produce a sufficient pressure of the conveying roller (4) against the conveyed material,
c) the two motors (42, 43), which are controllable independently of one another, are controlled by the electronic control system in a coordinated manner,
d) the conveying roller (4) is in the form of a hollow cylinder and rotatably mounted on a cylindrical base body (41) to be rotatable about its axis of symmetry (411), whereby the gear unit for the first motor (42) is situated within the base body (41),
e) a toothed gear unit is used to transmit force from the second motor (43) to the base body (41),
f) the base body (41) is mounted rotatably about an eccentric axis (412) extending parallel to its axis of symmetry (411),
g) the second motor (43) is coupled to the base body (41) for swinging the base body (41) out about its eccentric axis (412) and pressing the conveying roller (4) onto the conveyed material on the conveyor plane (3),
h) a toothed gear unit is used to transmit force from the first motor (42) to the conveying roller (4),
i) the gear unit driving the conveying roller (4) is constructed between the first motor (42) and the conveying roller (4) at least in part in the form of a planetary gear unit (425), and
k) the gear unit, which drives the conveying roller (4), with the planetary gear unit (425) and the first motor (42) are disposed within the base body (41), the sunwheel of the planetary gear unit (425) being arranged on the axis of symmetry (411) of the base body (41) and the planet wheels meshing with the region of the conveying roller (4) constructed in the form of a hollow wheel (424).

3. Installation as claimed in Claim 1 or 2, **characterised in that** a toothed gear unit, which is constructed at least in part in the form of a planetary unit, is provided between the second motor (43) and the base body (41) for the purpose of swinging out the base body (41) in the conveyor plane.

4. Installation as claimed in one of the preceding claims, **characterised in that** at least the second motor (43) is controllable to adjust predeterminable pressure forces of the conveyor roller (4) against the conveyed material with regard to its drive moment.

5. Installation as claimed in Claim 4, **characterised in that** the first and second motors (42, 43) are constructed in the form of controllable servomotors.

6. Installation as claimed in Claim 5, **characterised in that** the motors (42, 43) are brushless dc motors.

7. Installation as claimed in one of the preceding claims, **characterised in that** the electronic control system includes a sensor unit (7) for detecting the conveyed material and an automatic testing device (6), which controls the two independent motors (42, 43) in dependence on a movement state of the conveyed material detected at least by means of the internal sensor unit (7).

8. Installation as claimed in Claim 7, **characterised in that** the automatic testing device (6) is connected to the sensor unit (7), whereby the second motor (43) is firstly controllable before switching on the first motor (42) or alternatively the first motor (42) is firstly controllable before switching on the second motor (43) by means of the control units (421, 431) in dependence on the detected stationary or moved state of the conveyed material.

9. Installation as claimed in Claim 6 or 7, **characterised in that** the automatic testing device (6) is connected to a central unit by means of connections (5) for transmitting data acquired, such as the pressing force, tractive force, sensor function and speed of rotation of the conveying roller (4).

10. Installation as claimed in Claim 9, **characterised in that** means are provided in the automatic testing device (6) for anti-slip control, whereby slippage that occurs may be compensated for by deliberately increasing the pressure via the central unit by means of the data acquired from different drive units (1), the knowledge of the precise spacings of the drive units (1) and the knowledge of the speed of rotation of the conveying roller (4) and of the real transport speed of the conveyed material.

## Claims (Claims for the following Contracting State(s): AT, ES, IT)

1. Installation for moving a conveyed material along a conveyor plane, which is defined by undriven rollers (2) serving to carry and guide a conveyed material, including a drivable conveying roller (4), which is arranged between the undriven rollers (2), and an electronic control system for controlling a motor (42 and 43) driving the conveying rollers (4) including the following further features
a) the conveying roller (4) is connected to a first motor (42) and associated first control unit (421) for producing a necessary traction force to move the conveyed material along the conveyor plane (3),
b) a second motor (43) with an associated second control unit (431) is present to produce a sufficient pressure of the conveying roller (4) against the conveyed material,
c) the two motors (42, 43), which are controllable independently of one another, are controlled by the electronic control system in a coordinated manner,
d) the conveying roller (4) is in the form of a hollow cylinder and rotatably mounted on a cylindrical base body (41) to be rotatable about its axis of symmetry (411), whereby the gear unit for the first motor (42) is situated within the base body (41),
e) a toothed gear unit is used to transmit force from the first motor (42) to the conveying roller (4), the gear unit for the first motor (42) being situated within the base body (41),
**characterised by** the features
f) the base body (41) is mounted rotatably about an eccentric axis (412) extending parallel to its axis of symmetry (411),
g) the second motor (43) is coupled to the base body (41) for swinging the base body (41) out about its eccentric axis (412) and pressing the conveying roller (4) onto the conveyed material on the conveyor plane (3),
h) a toothed gear unit is used to transmit force from the second motor (43) to the base body (41).

2. Installation as claimed in Claim 1, **characterised in that** the electronic control system includes a sensor unit (7) for detecting the conveyed material and an automatic testing device (6), which controls the two independent motors (42, 43) in dependence on a movement state of the conveyed material detected at least by means of the internal sensor unit (7).

3. Installation as claimed in Claim 1 or 2, **characterised in that**
- the gear unit driving the conveying roller (4) has a pinion (422), which is mounted in the eccentric axis (412) of the cylindrical base body (41) and is connected to the first motor (42) and is situated within the cylindrical base body (41), and
- a driven wheel (423), which is rotatably mounted parallel to the axis, is present radially between this pinion (422) and the conveying roller (4) which projects radially outwardly beyond the base body (41) and meshingly engages in the region of the conveying roller (4) constructed in the form of a hollow wheel (424).

4. Installation as claimed in Claim 1 or 2, **characterised in that** the gear unit driving the conveying roller (4) is constructed between the first motor (42) and the conveying roller (4) at least in part in the form of a planetary gear unit (425).

5. Installation as claimed in Claim 4, **characterised in that** the gear unit driving the conveying roller (4), with the planetary gear unit (425) and the first motor (42) are disposed within the base body (41), the sunwheel of the planetary gear unit (425) being arranged on the axis of symmetry (411) of the base body (41) and the planet wheels meshing with the region of the conveying roller (4) constructed in the form of a hollow wheel (424).

6. Installation as claimed in Claim 1 or 2, **characterised in that** the gear unit for swinging the base body (41) out in the conveyor plane between the second motor (43) and the base body (41) is constructed in part in the form of a planetary gear unit (433).

7. Installation as claimed in one of the preceding claims, **characterised in that** at least the second motor (43) is controllable to adjust predeterminable pressure forces of the conveyor roller (4) against the conveyed material with regard to its drive moment.

8. Installation as claimed in Claim 7, **characterised in that** the first and second motors (42, 43) are constructed in the form of controllable servomotors.

9. Installation as claimed in Claim 8, **characterised in that** the motors (42, 43) are brushless dc motors.

10. Installation as claimed in Claim 2, **characterised in that** the automatic testing device (6) is connected to the sensor unit (7), whereby the second motor (43) is firstly controllable before switching on the first motor (42) or alternatively the first motor (42) is firstly controllable before switching on the second motor (43) by means of the control units (421, 431) in dependence on the detected stationary or moved state of the conveyed material.

11. Installation as claimed in Claim 10, **characterised in that** the automatic testing device (6) is connected to a central unit by means of connections (5) for transmitting data acquired, such as the pressing force, tractive force, sensor function and speed of rotation of the conveying roller (4).

12. Installation as claimed in Claim 11, **characterised in that** means are provided in the automatic testing device (6) for anti-slip control, whereby slippage that occurs may be compensated for by deliberately increasing the pressure via the central unit by means of the data acquired from different drive units (1), the knowledge of the precise spacings of the drive units (1) and the knowledge of the speed of rotation of the conveying roller (4) and of the real transport speed of the conveyed material.

## Revendications (Revendications pour l'(les) Etat(s) contractant(s) suivant(s): DE, FR, GB)

1. Dispositif pour déplacer un produit à transporter le long d'un plan de transport, qui est formé par des galets de roulement (2) sous entraînement, servant au support et au guidage d'un produit à transporter, équipé d'un galet transporteur (4) pouvant être entraîné, qui est disposé entre les galets de roulement (2) sans entraînement, et d'une électronique de commande pour la commande d'un entraînement (42 et 43) entraînant le galet transporteur (4) avec les autres caractéristiques suivantes
a) le galet transporteur (4) est en liaison avec un premier entraînement (42) et une première unité de commande (421) attribuée pour générer une force de traction nécessaire pour le déplacement du produit à transporter le long du plan du transport (3),
b) un deuxième entraînement (43) avec une deuxième unité de commande (431) attribuée est présente pour générer une force de pression suffisante du galet transporteur (4) contre le produit à transporter,
c) les deux entraînements (42, 43) amorçables indépendamment l'un de l'autre sont amorcés de façon coordonnée par l'électronique de commande,
d) le galet transporteur (4) est logé sous la forme d'un cylindre creux sur un corps de base (41) cylindrique de façon pivotante autour de son axe de symétrie (411), la transmission pour le premier entraînement (42) se trouvant à l'intérieur du corps de base (41),
e) une transmission par engrenages est utilisée pour la transmission de la force du deuxième entraînement (43) au corps de base (41),
f) le corps de base (41) est logé de façon pivotante autour d'un axe d'excentrique (412) agencé parallèlement à son axe de symétrie (411),
g) le deuxième entraînement (43) est couplé avec le corps de base (41) pour le basculement du corps de base (41) autour de son axe d'excentrique (412) et la pression du galet transporteur (4) contre le produit à transporter sur le plan de transport (3),
h) une transmission par engrenages est utilisée pour la transmission de force du premier entraînement (42) au galet transporteur (4),
i) la transmission entraînant le galet transporteur (4) présente un pignon (422) logé dans l'axe d'excentrique (412) du corps de base (41) cylindrique, qui est en liaison avec le premier entraînement (42) et est disposé à l'intérieur du corps de base (41) cylindrique,
k) une roue de sortie (423) logée de façon radiale entre ce pignon (422) et le galet de transporteur (4), pivotante parallèlement à l'axe, est présente, qui s'engage par engrènement dans une zone conçue comme une roue creuse (424) du galet transporteur (4) en dépassant du corps de base (41) radialement vers l'extérieur.

2. Dispositif pour déplacer un produit à transporter le long d'un plan de transport, qui est formé par des galets de roulement (2) sans entraînement, servant au support et au guidage d'un produit à transporter, équipé d'un galet de transporteur (4) pouvant être entraîné, qui est disposé entre les galets de roulement (2) sans entraînement, et d'une électronique de commande pour la commande d'un entraînement (42 et 43) entraînant le galet transporteur (4) avec les autres caractéristiques suivantes
a) le galet transporteur (4) est en liaison avec un premier entraînement (42) et une première unité de commande (421) attribuée pour générer une force de traction nécessaire pour le déplacement du produit à transporter le long du plan de transport (3),
b) un deuxième entraînement (43) avec une deuxième unité de commande (431) attribuée est présente pour générer une force de pression suffisante du galet transporteur (4) contre le produit à transporter,
c) les deux entraînements (42, 43) amorçables indépendamment l'un de l'autre sont commandés de façon coordonnée par l'électronique de commande
d) le galet transporteur (4) est logé sous la forme d'un cylindre creux sur un corps de base (41) cylindrique de façon pivotante autour de son axe de symétrie (411), la transmission pour le premier entraînement (42) se trouvant à l'intérieur du corps de base (41),
e) une transmission par engrenages est utilisée pour la transmission de force du deuxième entraînement (43) au corps de base (41),
f) le corps de base (41) est logé de façon pivotante autour d'un axe d'excentrique (412) agencé parallèlement à son axe de symétrie (411),
g) le deuxième entraînement est couplé avec le corps de base (41) pour le basculement du corps de base (41) autour de son axe d'excentrique (412) et la pression du galet transporteur (4) contre le produit à transporter sur le plan de transport (3),
h) une transmission par engrenages est utilisée pour la transmission de force du premier entraînement (42) au galet transporteur (4),
i) la transmission entraînant le galet transporteur (4) est conçue comme un engrenage planétaire (425) au moins dans une zone partielle entre le premier entraînement (42) et le galet transporteur (4), et
k) la transmission entraînant le galet transporteur (4) avec l'engrenage planétaire (425) et le premier entraînement (42) sont disposés à l'intérieur du corps de base (41), la roue principale de l'engrenage planétaire (427) étant disposée sur l'axe de symétrie (411) du corps de base (41) et les roues satellites s'engrenant dans une zone, conçue comme une roue creuse (424), du galet transporteur (4).

3. Dispositif selon la revendication 1 ou 2, **caractérisé en ce qu'**il est prévu une transmission par engrenages conçue comme un engrenage planétaire au moins dans une zone partielle entre le deuxième entraînement (43) et le corps de base (41) pour le basculement du corps de base (41) dans le plan de transport (3).

4. Dispositif selon l'une quelconque des revendications précédentes, **caractérisé en ce qu'**au moins le deuxième entraînement (43) peut être réglé en ce qui concerne son couple d'entraînement pour le réglage de forces de pression prédéfinissables du galet transporteur (4) contre le produit à transporter.

5. Dispositif selon la revendication 4, **caractérisé en ce que** le premier et le second entraînement (42, 43) sont conçus comme des servomoteurs réglables.

6. Dispositif selon la revendication 5, **caractérisé en ce que** les entraînements (42, 43) sont des moteurs à courant continu sans balai.

7. Dispositif selon l'une quelconque des revendications précédentes, **caractérisé en ce que** l'électronique de commande contient un bloc détecteur (7) pour la détection du produit à transporter et un dispositif d'autocontrôle (6), qui commande les deux entraînements (42, 43) indépendants en fonction d'un état de déplacement du produit à transporter qui est identifié au moins au moyen du bloc détecteur (7) interne.

8. Dispositif selon la revendication 7, **caractérisé en ce que** le dispositif d'autocontrôle (6) est en liaison avec le bloc détecteur (7), le deuxième entraînement (43) pouvant être amorcé pour commencer avant la mise en circuit du premier (42) ou comme autre alternative le premier entraînement (42) pouvant être amorcé pour commencer avant la mise en circuit du deuxième (43) au moyen des unités de commande (421, 431) en fonction de l'état identifié fixe ou en mouvement du produit à transporter.

9. Dispositif selon la revendication 6 ou 7, **caractérisé en ce que** le dispositif d'autocontrôle (6) est en liaison avec une unité centrale au moyen de connexions (5) pour la transmission de données acquises telle que la force de pression, la force de traction, le fonctionnement du détecteur et la vitesse de rotation du galet transporteur (4).

10. Dispositif selon ma revendication 9, **caractérisé en ce que** des moyens pour l'antipatinage sont prévus dans le dispositif d'autocontrôle (6), un glissement naissant pouvant être compensé par l'augmentation adéquate de la force de pression par l'intermédiaire de l'unité centrale au moyen des données acquises provenant de diverses unités d'entraînement (1), de la connaissance des espacements précis des unités d'entraînement (1) et de la connaissance de la vitesse de rotation du galet transporteur (4) et de la vitesse de transport réelle du produit à transporter.

## Revendications (Revendications pour l'(les) Etat(s) contractant(s) suivant(s): AT, ES, IT)

1. Dispositif pour déplacer un produit à transporter le long d'un plan de transport, qui est formé par les galets de roulement (2) sans entraînement, servant au support et au guidage d'un produit à transporter, équipé d'un galet transporteur (4) pouvant être entraîné, qui est disposé entre les galets de roulement (2) sans entraînement, et d'une électronique de commande pour la commande d'un entraînement (42 et 43) entraînant le galet transporteur avec les autres caractéristiques suivantes
a) le galet transporteur (4) est en liaison avec un premier entraînement (42) et une première unité de commande (421) attribuée pour générer une force de traction nécessaire pour le déplacement du produit à transporter le long du plan de transport (3),
b) un deuxième entraînement (43) avec une deuxième unité de commande (431) attribuée est présente pour générer une force de pression suffisante du galet transporteur (4) contre le produit à transporter,
c) les deux entraînements (42, 43) amorçables indépendamment l'un de l'autre sont amorcés de façon coordonnée par l'électronique de commande,
d) le galet transporteur (4) est logé sous la forme d'un cylindre creux sur un corps de base (41) cylindrique de façon pivotante autour de son axe de symétrie (411),
e) une transmission par engrenages est utilisée pour la transmission de force du premier entraînement (42) au galet transporteur (4), la transmission pour le premier entraînement (42) se trouvant à l'intérieur du corps de base (41),
**caractérisé par** les caractéristiques,
f) le corps de base (41) est logé de façon pivotante autour d'un axe d'excentrique (412) disposé parallèlement à son axe de symétrie (411),
g) le deuxième entraînement (43) est couplé avec le corps de base (41) pour le pivotement du corps de base (41) autour de son axe de symétrie (412) et la pression du galet transporteur (4) contre le produit à transporter sur le plan de transport (3).
h) une transmission par engrenages est utilisée pour la transmission de force du deuxième entraînement (43) au corps de base (41).

2. Dispositif selon la revendication 1, **caractérisé en ce que** l'électronique de commande contient un bloc détecteur (7) pour la détection du produit à transporter et un dispositif d'autocontrôle (6), qui commande les deux entraînements (42, 43) indépendants en fonction d'un état de mouvement du produit à transporter, détecté au moins au moyen du bloc détecteur (7) interne.

3. Dispositif selon la revendication 1 ou 2, **caractérisé en ce que** la transmission entraînant le galet transporteur (4) présente un pignon (422) logé dans l'axe d'excentrique (412) du corps de base (41) cylindrique, qui est en liaison avec le premier entraînement (42) et est disposé à l'intérieur du corps de base (41) cylindrique,
- une roue de sortie (423) logée dans le sens radial entre ce pignon (422) et le galet transporteur (4) et pouvant pivoter parallèlement à l'axe, est présente, laquelle s'engage par engrènement dans une zone, conçue comme une roue creuse (424), du galet transporteur (4) en débordant du corps de base (41) radialement vers l'extérieur.

4. Dispositif selon la revendication 1 ou 2, **caractérisé en ce que** la transmission entraînant le galet transporteur (4) est conçue au moins dans une zone partielle comme un engrenage planétaire (425) entre le premier entraînement (42) et le galet transporteur (4).

5. Dispositif selon la revendication 4, **caractérisé en ce que** la transmission entraînant le galet transporteur (4) avec l'engrenage planétaire (425) et le premier entraînement (42) sont disposés à l'intérieur du corps de base (41), la roue principale de l'engrenage planétaire (425) étant disposée sur l'axe de symétrie (411) du corps de base et les roues satellites s'engrenant dans une zone, conçue comme une roue creuse (424), du galet transporteur (4).

6. Dispositif selon la revendication 1 ou 2, **caractérisé en ce que** la transmission pour le basculement du corps de base (41) dans le plan de transport (3) est conçue au moins dans une zone partielle comme un engrenage planétaire (433) entre le deuxième entraînement (43) et le corps de base (41).

7. Dispositif selon l'une quelconque des revendications précédentes, **caractérisé en ce qu'**au moins le deuxième entraînement (43) peut être réglé en ce qui concerne son couple d'entraînement pour le réglage de forces de pression prédéfinissables du galet transporteur (4) contre le produit à transporter.

8. Dispositif selon la revendication 7, **caractérisé en ce que** les premier et second entraînements (42, 43) sont conçus comme des servomoteurs réglables.

9. Dispositif selon la revendication 8, **caractérisé en ce que** les entraînements (42, 43) sont des moteurs à courant continu sans balai.

10. Dispositif selon la revendication 2, **caractérisé en ce que** le dispositif d'autocontrôle (6) est en liaison avec le bloc détecteur (7), le deuxième entraînement (43) pouvant être amorcé pour commencer avant la mise en circuit du premier (42) ou, comme autre alternative, le premier entraînement (42) pouvant être amorcé en premier avant la mise en circuit du deuxième (43) au moyen des unités de commande (421, 431), en fonction de l'état fixe ou en déplacement détecté du produit à transporter.

11. Dispositif selon la revendication 10, **caractérisé en ce que** le dispositif d'autocontrôle (6) est en liaison avec une unité centrale au moyen de connexions (5) pour la transmission de données acquises telles que la force de pression, la force de traction, la fonction de capteur et la vitesse de rotation du galet transporteur (4).

12. Dispositif selon la revendication 11, **caractérisé en ce qu'**il est prévu des moyens pour l'antipatinage dans le dispositif d'autocontrôle (6), un glissement en formation pouvant être compensé par l'augmentation adéquate de la force de pression par l'intermédiaire de l'unité centrale au moyen des données acquises provenant de diverses unités d'entraînement (1), de la connaissance des espacements définis des unités d'entraînement (1) et de la connaissance de la vitesse de rotation du galet transporteur (4) et de la vitesse de transport réelle du produit à transporter.
